# EUROPEAN PATENT SPECIFICATION

(11) **EP 2 934 191 B1**
(45) Date of publication and mention of the grant of the patent: **06.04.2016**
(21) Application number: 13799228.5
(22) Date of filing: 18.11.2013
(51) Int. Cl.: A23L 23/10, A23P 30/00

(54) **POROUS COMPOSITION COMPRISING SALT AND EDIBLE FAT**
PORÖSE ZUSAMMENSETZUNG, UMFASSEND SALZ UND EIN ESSBARES FETT
COMPOSITION POREUSE COMPRENANT DU SEL ET DE LA MATIÈRE GRASSE COMESTIBLE

(30) Priority: 20.12.2012 EP 12198353
(43) Date of publication of application: 28.10.2015
(73) Proprietor: Unilever N.V., 3013 AL Rotterdam (NL); Unilever PLC, London, Greater London EC4Y 0DY (GB)
(72) Inventor: PAUNOV, Vesselin Nikolaev, Hull HU6 7RX (GB); RUTKEVICIUS, Marius, Hull HU6 7RX (GB); STOYANOV, Simeon Dobrev, NL-3133AT Vlaardingen (NL); MEHL, Georg Hans Rudolf, Hull HU6 7RX (GB)
(74) Representative: Reijns, Tiemen Geert Pieter
(86) International application number: PCT/EP2013/074080
(87) International publication number: WO 2014/095196

(56) References cited:
- EP-A1- 1 074 188
- EP-A1- 2 067 409
- DE-U1-202011 109 456
- GB-A- 1 464 429
- US-A- 6 126 979
- US-A1- 2005 281 935
- US-A1- 2008 299 268
- US-A1- 2012 052 151
- DATABASE WPI Week 198636 Thomson Scientific, London, GB; AN 1986-236259 XP002698375, & JP S61 166386 A (SUNTORY LTD) 28 July 1986 (1986-07-28)
- STEFFEL A ET AL: "INFLUENCE OF WHEY PROTEIN PARTICLES ON THE RENNETING PROPERTIES OF MILK", MILCHWISSENSCHAFT, VV GMBH VOLKSWIRTSCHAFTLICHER VERLAG. MUNCHEN, DE, vol. 54, no. 9, 1 January 1999 (1999-01-01), pages 510-513, XP000854120, ISSN: 0026-3788

## Description

The present invention relates to a porous composition comprising fat, salt and a hydrocolloid. The invention further relates to a method for preparing such compositions, and to use of the compositions.

### BACKGROUND OF THE INVENTION

Rutkevicius M. et al. (Materials Research Bulletin 47 (4) p.980-986, April 2012) disclose the production of porous lightweight porous materials (in particular cement, gypsum, clay-cement mixture, and polydimethylsiloxane). This is done by templating hydrogel slurries of polyacrylamide and gellan gum with aqueous slurries of cement, gypsum, or clay-cement mixture), or disperse in curable polydimethylsiloxane. After drying and solidification of the continuous phase, the evaporation of structured hydrogel has produced porous composite materials.

WO 2007/085609 A1 discloses bouillon cubes containing cereal, vegetable and/or fruit fibers, containing up to 90% of cellulose.

### SUMMARY OF THE INVENTION

Bouillon cubes, whose ingredients are mainly solid fat and salt, are often hard structures that may be difficult to break down or divide into pieces. Therefore there is a requirement for bouillon cubes to make them easier to crumble. On the other hand, they should still be homogeneous and strong enough to package them in conventional packs. Additionally many consumers want a bouillon soup made using bouillon cubes to be a bit thick or viscous, hence they may add as an extra ingredient a thickener to the broth that they have made from the bouillon cubes. Moreover, it may take too much time to dissolve or disperse a bouillon cube, and the dissolution may not be satisfying for the consumer. The flavours may not be released completely, and lumps may appear in the final broth. Therefore the consumer has a need for a bouillon cube that does not have these disadvantages.

We have now solved these requirements by preparing a solid or semi-solid composition comprising edible fat and kitchen salt, wherein the composition comprises pores, wherein the pores contain a hydrocolloid. These compositions can be used as bouillon cubes.

On the one hand the hydrocolloid and the pores make the compositions stronger, as the pores distribute forces that are exerted on a bouillon cube. They still are strong enough to be packed. On the other hand, depending on the porosity they are still relatively easy to crumble and dose in small amounts. Additionally, the porous compositions can completely disperse and dissolve in water better than non-porous cubes, releasing all their ingredients in the broth. Finally, as the pores contain a hydrocolloid, the hydrocolloid may serve as thickener of the broth that is produced when dispersing the porous composition.

Hence in a first aspect the invention provides a solid or semi-solid composition comprising an edible fat and an inorganic salt, wherein the composition comprises pores, and wherein the pores contain a hydrocolloid; wherein the pores constitute from 1 to 70% of the volume of the composition.

In a second aspect the present invention also provides a method for preparation of a composition according to the first aspect of the invention, comprising the following steps:
a) supplying a composition in liquid form comprising an edible fat and inorganic salt;
b) supplying an aqueous composition comprising a hydrocolloid that is dissolved or dispersed in the aqueous composition to form a hydrogel;
c) formation of hydrogel particulates from the composition of step b);
d) dispersing the hydrogel particulates from step c) into the composition from step a);
e) optionally cooling the mixture from step d); and
f) drying the mixture from step d) or from step e).

In a third aspect the invention provides use of a composition according to the first aspect of the invention as a bouillon cube.

### DETAILED DESCRIPTION

Unless defined otherwise, all technical and scientific terms used herein have the same meaning as commonly understood by the skilled person. The abbreviation 'wt%' refers to percentage by weight. In case a range is given, the given range includes the mentioned endpoints.

In a first aspect the present invention provides a solid or semi-solid composition comprising an edible fat and an inorganic salt, wherein the composition comprises pores, and wherein the pores contain a hydrocolloid. The pores are formed upon evaporation of the water content of hydrogel particulates dispersed in a continuous matrix of fat and inorganic salt. A solid or semi-solid composition means that it keeps its shape and form at a certain temperature, preferably at room temperature, preferably at a temperature ranging from 20 to 25 °C.

Preferably the pores constitute from 1 to 70% of the volume of the composition, preferably from 5 to 65% of the volume of the composition, preferably from 10 to 50% of the volume of the composition. Preferably the volume fraction of the pores ranges from 10% to 40% of the composition, more preferably from 15% to 35% of the composition.

Preferably, at least part of the hydrocolloid in the pores is attached to the wall of the pores. The hydrocolloids may form a kind of scaffold in the pores, by forming an irregular skeleton of entangled 'poles' between the walls of the pores. On the other hand, the hydrocolloids may also be deposited on the inside wall of the pores, leaving a void space. Depending on the volume percentage of hydrocolloids used, they may form an open network of pores which creates a void space in the composition.

The fat in the composition according to the invention may be any fat which is food grade. Fat may comprise both solid fat and liquid fat, including oil. The fat may for example comprise animal fat, such as fat from pork, chicken or beef, but also vegetable fat, such as olive oil, palm oil or rapeseed oil may be used. Also fractions of these fats may be used. A combination of fats is also possible. The main components in these fats are triglycerides. An especially preferred fat in the present composition is fractioned palm oil, in particular palm oil stearin. The edible fat preferably is solid or semi-solid at room temperature, meaning that it keeps its shape and form when kept at room temperature.

Preferably, the amount of edible fat ranges from 5% to 50% by weight of the composition. Preferably, the fat content is at most 40%, preferably at most 30%, more preferably at most 25%, and even more preferred at most 20% by weight of the composition. Preferably the fat content is at least 10%, more preferred at least 13% by weight of the composition. Most preferred the amount of edible fat ranges from 15% to 20% by weight of the composition.

Preferably, the inorganic salt comprises sodium chloride and/or potassium chloride. Also other food grade salts and/or salt replacers may be present, for example ammonium chloride. Preferably, the inorganic salt comprises sodium chloride and/or potassium chloride, and preferably the amount of inorganic salt ranges from 40% to 90% by weight of the composition. Preferably the amount of inorganic salt ranges from 50% to 90%, more preferred from 55% to 90% by weight of the composition. Most preferred the amount of inorganic salt ranges from 70% to 90% by weight of the composition.

Additionally, the composition according to the present invention may comprise monosodium glutamate in an amount ranging from 2% to 45% by weight of the composition, preferably from 10% to 35%, more preferably from 15% to 30% by weight of the composition.

The composition may contain starch in a preferred amount ranging from 2% to 20% by weight of the composition, preferably from ranging from 2% to 15%, more preferred ranging from 5% to 12%, and most preferred ranging from 7% to 10% by weight of the composition. Preferably the starch comprises potato starch or corn starch. In the context of the present invention, the starch is not considered to be a hydrocolloid that is contained in the pores of the composition. Starch may acts as a binder and may increase the strength of the compositions according to the invention. When starch is present in the compositions, then preferably also water is present in the compositions in order to hydrate the starch and make the starch functional.

A requirement for the hydrogels used in the preparation of the composition of the invention, is that they are tolerant to relatively high levels of inorganic salt. Therefore preferably the hydrocolloid comprises at least one compound chosen from the group consisting of xanthan gum, locust bean gum, guar gum, and konjac gum.

Preferably the hydrocolloid comprises a combination of at least two hydrocolloids. A preferred combination of hydrocolloids is xanthan gum and locust bean gum, preferably at a weight ratio ranging from 70:30 to 30:70, most preferred at a weight ratio of 70:30.

Another preferred combination of hydrocolloids is xanthan gum and tara gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and guar gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and cassia gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and konjac gum , preferably at a weight ratio ranging from 85:15 to 15:85. Most preferably, the hydrocolloid comprises xanthan gum and konjac gum in a weight ratio ranging from 1.5:1 to 2.5:1.

The hydrogels used in the preparation of the composition of the invention preferably comprise an inorganic salt when they are prepared. Therefore the hydrogel particles that are mixed with the mixture of edible fat and inorganic salt preferably contain an inorganic salt. If the hydrogel contains inorganic salt, diffusion of salt from the fat-salt mixture to the hydrogel particles is reduced, therewith reducing the chance that the structure of the composition is compromised during preparation. The inorganic salt preferably comprises sodium chloride and/or potassium chloride. Preferably the inorganic salt in the hydrogel is the same (or same mixture) as the inorganic salt in the composition of the invention. Preferably the concentration of inorganic salt is maximally 30% by weight of the aqueous composition. Preferably the concentration of the inorganic salt ranges from 10% to 30% by weight of the aqueous composition, preferably from 20% to 30% by weight of the aqueous composition. The aqueous composition preferably is saturated with the inorganic salt.

The hydrogel preferably further comprises a calcium salt, preferably calcium chloride. In case the hydrocolloid comprises xanthan gum, then the calcium ion may interact with the carboxyl groups of the xanthan gum, to increase the strength of the hydrogel. The concentration of calcium salt may range from 0 to 2% by weight, preferably from 0.5% to 1.5% by weight of the aqueous composition.

Preferably the composition comprises starch and water mixed with the edible fat and inorganic salt. This optional presence of starch is in addition to the presence of the hydrocolloid. In preparation of the compositions, the starch may be mixed with the edible fat and inorganic salt, together with some water. The advantage of the presence of starch is that the strength of the compositions is increased. The concentration of starch preferably ranges from 0% to 5% by weight, preferably from 1% to 4.5%, preferably from 2% to 4% by weight of the composition.

The pores in the composition may take a variety of shapes or forms. They may be spherical, or cylindrical, bent or straight, crosslinked with other pores, or not. Preferably, the internal cross-sectional diameter of the pores ranges from 50 micrometer to 5 millimeter, preferably from 100 micrometer to 1 millimeter, preferably from 100 micrometer to 500 micrometer. The pore size will depend on the way the compositions are prepared. At a relatively low volume of hydrogel, the pores will mainly be present as voids, while at a relatively high volume of hydrogel, the pores are more interconnected and form a type of channels or larger voids.

The compositions are dry or nearly dry. There may be some bound water to the ingredients of the composition, which in practice is unavoidable. There may also be water which can be considered to be dissolved in the ingredients of the composition. For example, the inorganic salt may contain some water or may be humid. The amount of water in the composition preferably is maximally 3%, more preferred maximally 1% by weight of the composition. When starch and/or modified starch is present in the compositions, then preferably the water level is at about the same concentration as the concentration of starch and/or modified starch.

Preferably, the BET surface area of the composition ranges from 5 to 30 m²·g⁻¹. The BET surface area is a measure for the internal volume of a porous structure. It can be determined using methods known in the art.

The composition may further comprise ingredients which can normally be found in bouillon cubes. Preferably the composition contains one or more of the following ingredients: little pieces of vegetables like carrot, onion, and tomato, seasoning, spices, herbs, flavours, acids, animal fat, and meat extract. Also flavour enhancers like disodium guanylate, and disodium inosinate may be present.

### Method for preparation

In a second aspect the present invention also provides a method for preparation of a composition according to the first aspect of the invention, comprising the following steps:
a) supplying a composition in liquid form comprising an edible fat and inorganic salt;
b) supplying an aqueous composition comprising a hydrocolloid that is dissolved or dispersed in the aqueous composition to form a hydrogel;
c) formation of hydrogel particulates from the composition of step b);
d) dispersing the hydrogel particulates from step c) into the composition from step a);
e) optionally cooling the mixture from step d); and
f) drying the mixture from step d) or from step e).

In the first step a), a mixture is made of an edible fat in liquid form (preferably molten by increase of temperature), and the inorganic salt. Preferably, in this step the concentration of edible fat ranges from 5% to 50% by weight. Preferably, the concentration is at most 40%, preferably at most 30%, more preferably at most 25%, and even more preferred at most 20% by weight of the composition. Preferably the fat concentration is at least 10%, more preferred at least 13% by weight. Most preferred the concentration of edible fat ranges from 15% to 20% by weight. Preferably the temperature of the fat mixture in this step is above the melting point of the fat, to make the fat liquid.

Preferably, in this step the concentration of inorganic salt ranges from 40% to 90% by weight. Preferably the concentration of inorganic salt ranges from 50% to 90%, more preferred from 55% to 90% by weight. Most preferred the concentration of inorganic salt ranges from 70% to 90% by weight.

Preferably this mixture in step a) comprises starch. The concentration of starch preferably ranges from 0% to 5% by weight, preferably from 1% to 4.5%, preferably from 2% to 4% by weight of the composition. When starch is present in the compositions, then preferably also water is present in the compositions in order to hydrate the starch and make the starch functional. The preferred amount of water in that case is similar to the amount of starch.

In step b) a hydrogel of the hydrocolloid in water is prepared. Preferably in step b) the concentration of the hydrocolloid ranges from 0.5% to 5% based on the weight of the aqueous dispersion, preferably from 1% to 4% by weight. More preferred the concentration of the hydrocolloid ranges from 1% to 3.5%, and most preferred the concentration of the hydrocolloids ranges from 1% to 2% by weight of the aqueous composition. The concentration of hydrocolloid in the aqueous composition, and consequently in the hydrogel and the pores, may influence the dissolution speed of the compositions according to the invention.

A requirement for the hydrogels used in the preparation of the composition of the invention, is that they are tolerant to relatively high levels of inorganic salt. Therefore preferably in step b) the hydrocolloid comprises at least one compound chosen from the group consisting of xanthan gum, locust bean gum, guar gum, and konjac gum.

Preferably the hydrocolloid comprises a combination of at least two hydrocolloids. A preferred combination of hydrocolloids is xanthan gum and locust bean gum, preferably at a weight ratio ranging from 70:30 to 30:70, most preferred at a weight ratio of 70:30.

Another preferred combination of hydrocolloids is xanthan gum and tara gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and guar gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and cassia gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and konjac gum , preferably at a weight ratio ranging from 85:15 to 15:85. Most preferably, the hydrocolloid comprises xanthan gum and konjac gum in a weight ratio ranging from 1.5:1 to 2.5:1.

Preferably, the composition from step b) additionally comprises an inorganic salt, preferably sodium chloride and/or potassium chloride, preferably at a concentration of maximally 30% by weight of the aqueous composition. The reason that inorganic salt preferably is present, is to prevent that inorganic salt mixed with the edible fat from the composition migrates to the gel phase, if no salt is present in the gel phase. Preferably the concentration of the inorganic salt in the aqueous composition ranges from 10% to 30% by weight of the aqueous composition, preferably from 20% to 30% by weight of the aqueous composition. The aqueous composition preferably is saturated with the inorganic salt.

The aqueous composition preferably further comprises a calcium salt, preferably calcium chloride. In case the hydrocolloid comprises xanthan gum, then the calcium ion may interact with the carboxyl groups of the xanthan gum, to increase the strength of the hydrogel. The concentration of calcium salt may range from 0 to 2% by weight, preferably from 0.5% to 1.5% by weight of the aqueous composition.

The advantage of a system of xanthan gum and calcium ions, is that a more brittle gel is created, which leads to an easier formation of particulates in step c).

In step c), the gel phase is made into discrete particulates using any suitable method to prepare particles from gels. Preferably, the gel particulates in step c) have a volume weighted average diameter ranging from 50 micrometer to 5 millimeter, preferably from 100 micrometer to 1 millimeter, preferably from 100 micrometer to 500 micrometer. The size of these particulates will influence the size of the pores. The particulates can be prepared for example using a mixer, blender or meat grinder device that cuts the hydrogel in small pieces. Using this type of technology, the hydrogel particulates may have a variety of shapes. Optionally the hydrogel particulates may be sieved in order to remove any particulates above a determined size. The volume based particle size equals the diameter of a sphere that has the same volume as a given particle.

In step d), the hydrogel particulates from step c) are dispersed into the composition from step a). The mixture of edible fat and inorganic salt is mixed with the gel particulates, such that a dispersion of particulates is formed in the fat-salt mixture. The hydrogel particles play the role of the template around which the continuous phase (salt - fat) solidifies. Preferably, in step d) the weight ratio of the composition from step a) and the composition from step c) ranges from 99:1 to 30:70, preferably from 95:5 to 35:65, preferably from 90:10 to 50:50.

In step e), the mixture from step d), the dispersion of particulates of hydrogel in the fat-salt mixture, is optionally cooled. Preferably the mixture from step d) is cooled in step e). Cooling leads to solidification, therewith giving the composition its structure, by a continuous fat-salt mixture/structure around the hydrogel particles.

In the subsequent step f), the mixture from step d) or from step e) is dried, in order to remove water and create pores containing the hydrocolloid. The drying can be done by any suitable drying step, as long as the structure of the fat is contained. Hence preferably the drying step is done at a temperature below the melting temperature of the edible fat. Methods for drying that are preferably employed are freeze-drying, drying under vacuum, and drying under mildly elevated temperatures in order to prevent melting of the fat phase. The compositions may be degassed before drying, in order to prevent increase of the volume of the compositions. Volume expansion may occur when drying is done under reduced pressure, e.g. under vacuum, due to expanding air bubbles.

In a third aspect the invention provides use of a composition according to the first aspect of the invention as a bouillon cube. The compositions of the invention may be used in any common way as the consumer is used to with a conventional bouillon cube.

### DESCRIPTION OF FIGURES

*Figure 1*: pictures of compositions prepared with hydrogel, at a content ranging from 0% to 50% by volume hydrogel, samples containing starch.
*Figure 2*: pictures of compositions prepared with hydrogel, at a content ranging from 0% to 50% by volume hydrogel, samples without starch.
*Figure 3**:* Scanning electron microscope picture of a composition according to the invention, templated with 50% by volume hydrogel.
Left (a): bar size 1 mm
Right (b): bar size 200 micrometer
*Figure 4*: Plot of measured pressure on compositions as function of displacement, same samples as in Figure 1, samples prepared with 0% to 50% by volume hydrogel.
*Figure 5**:* Plot of measured pressure on compositions as function of displacement, same samples as in Figure 2, samples prepared with 0% to 50% by volume hydrogel.

### EXAMPLES

The following non-limiting examples illustrate the present invention.

### Raw materials:

All compounds were used as received.
   - Water used for all experiments was distilled water.
   - Xanthan gum (Vanzan NF) was obtained from R.T. Vanderbilt Company, Inc. (Norwalk, CT, USA);
   - Konjac gum from FMC BioPolymer (Philadelphia, PA, USA);
   - Locust bean gum (Genu gum® type RL-200) from CP Kelco (Atlanta, Georgia, USA);
   - Table salt (NaCl), had anti-caking agent (E535), supplier Dri-Pak Ltd. (Ilkeston, Derbyshire, UK);
   - Calcium chloride dehydrate (purity: 100.14%) was purchased from Fisher scientific (Landsmeer, The Netherlands);
   - ammonium carbonate ((NH₄)₂CO₃) from Sigma-Aldrich (St. Louis, MO, USA);
   - ammonium bicarbonate (NH₄HCO₃) from Sigma-Aldrich (St. Louis, MO, USA);
   - Palmoil stearin;
   - Vegetable fat mixture of 50 wt% dfPOf (dry fractioned fluid palm oil fraction) and 50 wt% CN31 (fully hardened coconut oil);
   - Potato Starch (9% moisture, pressed);
   - Palm kernel oil from Rich Products Corporation (Buffalo, NY, USA).

### Preparation of hydrogel with xanthan gum and konjac gum

Compositions were prepared using a temperature controlled water bath. 120 mL of a NaCl solution (265.5 g/L) was heated to 90°C, and then the remaining ingredients calcium chloride dehydrate (1.64g, 1.3 wt%), xanthan gum (2.89g, 2.3 wt%) and konjac gum (1.45g, 1.1 wt%) were added whilst mixing with an Ultraturrax mixer (ex IKA-Werke GmbH & Co. KG, Staufen, Germany) at 4000 rpm and further mixed for 5 minutes. After degassing using glass vacuum desiccator (15 minutes, 20 mmHg), the mixture was allowed to cool down and was kept at room temperature overnight. The hydrogel was then blended (5 minutes, 4,000 rpm) using Silverson L4R mixer (ex Silverson, East Longmeadow, MA, USA) by adding small volume of salt solution (2mL) for lubrication. The size of the gel particulates was determined using light microscopy and image analysis software (Olympus BX51 microscope equipped with Olympus DP70 camera using Image-Pro Plus V6 software). They were heterogeneous of size (size ranging from about 40 micrometer to about 270 micrometer. Finally, the produced hydrogel slurry was passed through a mesh (hole diameter: 229 micrometer) to homogenise the slurry by removing large (unblended) hydrogel beads.

### Salt - fat composites templating with hydrogel slurries

The composites were prepared by first melting the fat mixture (40°C, 14 wt% palmoil stearin, 1 wt% vegetable fat), adding the potato starch (4 wt%) and then the water drop by drop (4 wt%) and lastly the salt crystals (77 wt% NaCl), which were crushed for 5 minutes using pestle and mortal. Some composites were made without starch to determine the effect from the starch addition as a binder. Also, the percentage of starch and water were adjusted. The salt - fat slurries were kept at 40°C until it was mixed with the blended hydrogels and homogenized with a hand mixer. All final samples corresponded to 40mL and various ratios of salt-fat slurry - hydrogel were used to see the influence on the final material. The total volumes of the samples were moulded in cylinder tubes (d= 37mm) cut lengthwise and joined by clamps with a removable base made of PDMS. The composites were allowed to solidify and were freeze dried overnight (-40°C, 6 mmHg). Some samples were dried using glass vacuum desiccators (30 mmHg) at room temperature or also using a low temperature and vacuum (-40°C, 30 mmHg). Moreover, some samples were dried with the mould and without the mould.

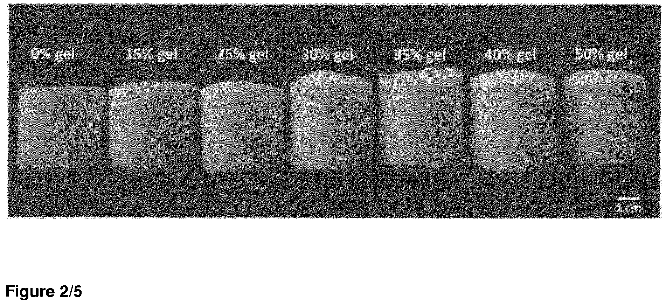

Various composition with a varying amount of hydrogel were prepared. Figure 1 shows the compositions prepared with hydrogel as prepared above, at a content ranging from 0% to 50% by volume hydrogel. The solid composition contained 14 wt% palmoil stearin, 1 wt% vegetable fat, 4 wt% potato starch, 4 wt% water (for the starch) and 77 wt% kitchen salt.

Also compositions without starch were prepared, to investigate the influence of the starch. The solid composition in this case consisted of 14 wt% palmoil stearin, 1 wt% vegetable fat, and 85 wt% kitchen salt. Figure 2 shows close up of compositions prepared with a range of hydrogel concentrations (ranging from 0 to 50% by volume).

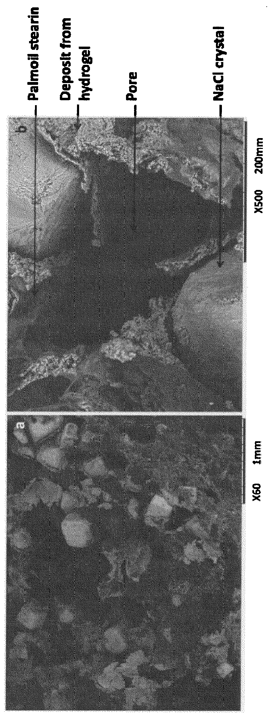

Prepared compositions were investigated using scanning electron microscopy (TM-1000 from Hitachi). An example of a composition is shown in Figure 3 (in this case 15 wt% fat, 81 wt% kitchen salt, 4 wt% starch) templated with 50% by volume hydrogel). The images show elements of the composition (palmoil stearin, deposit of hydrogel, a pore, and salt crystals).

### Strength of compositions

The strength of the compositions was tested by determining the compression strength. The compression test force -compression length curve was measured by universal testing machine (UTM, Lloyds Instrument Co., UK). What is measured is the compression of a sample under the influence of a force exerted on the sample. Testing speed and load cell were 4 mm/min and 100 kN, respectively. Samples (a height of 35mm and a diameter of 37mm) were placed between two flat circular plates. The initial position of the top plate was in contact with the sample. Then the top plate went down and pressed the sample with a speed of 4.00 mm/min to a final compression length of 10 mm. Finally the computer connected to the machine plots the load as a function of the extension.

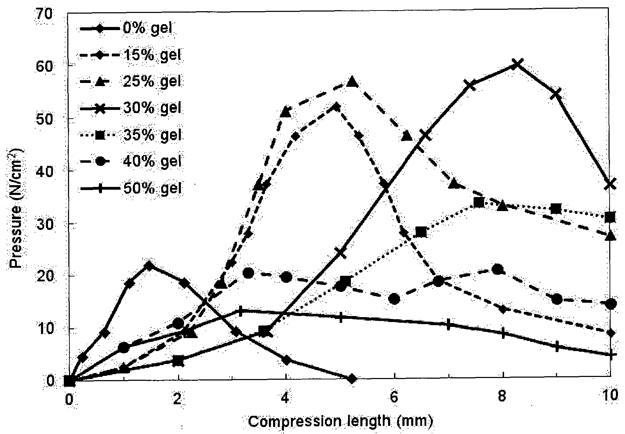

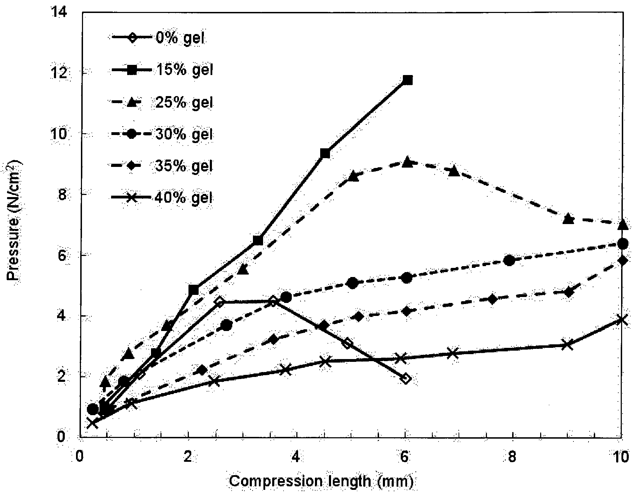

Figure 4 gives a plot of the measured pressure (in N/cm²) as function of the compression length for the compositions depicted in Figure 1 (compositions containing starch). Figure 5 plots the measured pressure (in N/cm²) as function of the compression length for the compositions depicted in Figure 2 (compositions without starch). The pressure that the compositions containing starch can withstand are higher than of the samples without starch.

The following table lists the maximum compression force (N/cm²) that is measured as function of the volume percentage of hydrogel used for preparing the compositions, both for the samples with starch (Figure 1, Figure 4), as well as the samples without starch (Figure 2, Figure 5).

**Table 1 Maximum pressure of compositions as function of volume percentage of hydrogel used in preparation, samples with starch and without starch**

| *volume hydrogel [% by volume of composition]* | *maximum compression force compositions with starch (**Figure 1**) [N*/*cm²]* | *maximum compression force compositions without starch (**Figure 2**) [N*/*cm²]* |
|---|---|---|
| 0 | 22.0 | 5.5 |
| 15 | 52.0 | 12.0 |
| 25 | 56.3 | 9.3 |
| 30 | 59.6 | 6.4 |
| 35 | 33.4 | 5.9 |
| 40 | 20.7 | 3.9 |
| 50 | 13.1 | |

Figure 4 and Table 1 show that the compositions containing starch and prepared with up to 35% by volume hydrogel can withstand a higher force than the sample without pores, thus the composition becomes stronger than without pores. In this experiment at a pore volume of more than 35% by volume, the compositions become more fragile than the composition without pores.
Figure 5 and Table 1 show that also the compositions that do not contain starch and are prepared with up to 35% by volume hydrogel can withstand a higher force than the sample without pores, thus the composition becomes stronger than the compositions without pores.

These data clearly show that the addition of starch helps to enforce the compositions, as starch acts as a binder. Moreover, the compositions according to the invention containing pores are also stronger than a composition without pores, until a pore volume of 35% by volume.

### Dissolution of compositions

To investigate the effect of the pores and the hydrocolloids on dissolution, the following procedure was applied to determine dissolution of the compositions. The procedure involves the use of a beaker, a magnetic stirrer and a mesh with a cylinder shape (diameter: 5 cm). The mesh allows bringing the sample 4 cm up from the surface of the bottom of beaker. Then, the sample was submerged in 1500 mL of distilled water previously heated to 90°C. The speed of stirring was constant (800 rpm) and the evaporation was prevented by covering beaker with foil. The disintegration time corresponds to the time from immersing the samples of the same shape (a height of 35 mm and a diameter of 37 mm) to the moment when fragments of the composition are not visible anymore. The compositions are not in contact with the impeller, only with water. Data are given in the following table.

**Table 2 Dissolution time of compositions as function of volume percentage of hydrogel used in preparation, samples without starch (same as in Figure 2).**

| *volume hydrogel [% by volume of composition]* | *dissolution time [seconds]* |
|---|---|
| 0 | 58 |
| 10 | 588 |
| 15 | 1233 |
| 20 | 1387 |
| 25 | 1631 |
| 30 | 1847 |
| 35 | 493 |
| 40 | 224 |
| 50 | 72 |

The results of the tests (with the compositions that did not contain starch, as in Figure 2) showed that the dissolution time for the compositions increased upon increase of the pore volume, until a pore volume of 30% by volume. This can be attributed to dry hydrocolloids in the pores, which upon wetting rehydrate, swell and block effective diffusion of hot water. When the pore volume was higher than 30% by volume, the dissolution time decreased again, to reach the same dissolution time of the sample without pores, when the pore volume was 50% by volume. This can be attributed to the increasing pore volume, and more open pore structure, as well as the compositions becoming more fragile at pore volumes of more than 30% by volume.

The weight loss of the prepared compositions upon drying was determined, as function of the hydrogel volume in the compositions. This was done by measuring the weight of the compositions before and after drying. The compositions as presented in Figure 1 (with starch) and Figure 2 (without starch) were used for this.

**Table 3 Weight loss of compositions as function of volume percentage of hydrogel used in preparation, samples with starch and without starch**

| *volume hydrogel [% by volume of composition]* | *weight loss compositions with starch (**Figure 1**) [% of initial weight]* | *weight loss compositions without starch (**Figure 2**) [% of initial weight]* |
|---|---|---|
| 0 | 4.7 | 0 |
| 10 | | 5.2 |
| 15 | 11.9 | 9.2 |
| 20 | | 12.4 |
| 25 | 18.1 | 14.9 |
| 30 | 21.5 | 18.8 |
| 35 | 24.0 | 21.5 |
| 40 | 26.3 | 26.0 |
| 50 | 33.3 | 31.5 |

In both cases the weight loss due to drying was linearly related to the volume percentage of hydrogel used for preparing the samples.

Degassing could be used to prevent volume expansion of the compositions, which may occur when the compositions are dried under vacuum. A comparison was made between compositions (in this case without starch, as in Figure 2) that were degassed before drying and that were not degassed before drying. Degassing was done by putting the compositions in a vacuum desiccators before solidification and freeze drying.

**Table 4 Weight loss of compositions as function of volume percentage of hydrogel used in preparation, samples with starch and without starch**

| *volume hydrogel [% by volume of composition]* | *volume expansion without degassing [%]* | *volume expansion with degassing [%]* |
|---|---|---|
| 0 | 6.3 | 3.1 |
| 15 | 5.9 | 2.9 |
| 25 | 15.2 | 6.1 |
| 30 | 29.0 | 9.7 |
| 35 | 35.5 | 9.7 |
| 40 | 37.5 | 6.3 |
| 50 | 46.9 | 3.1 |

When the samples were degassed, there is a considerable decrease in swelling compared to the non-degassed samples. Drying was slower with degassed samples.

## Claims

1. A solid or semi-solid composition being a bouillon cube, comprising an edible fat and an inorganic salt, wherein the composition comprises pores, and wherein the pores contain a hydrocolloid; the pores constitute from 1 to 70% of the volume of the composition, wherein at least part of the hydrocolloid in the pores is attached to the wall of the pores, and wherein the internal cross-sectional diameter of the pores ranges from 50 micrometer to 5 millimeter, preferably from 100 micrometer to 1 millimeter, preferably from 100 micrometer to 500 micrometer.

2. A composition according to claim 1, wherein the pores constitute from 5 to 65% of the volume of the composition, preferably from 10 to 50% of the volume of the composition.

3. A composition according to any of claims 1 or 2, wherein the amount of edible fat. ranges from 5% to 50% by weight of the composition.

4. A composition according to any of claims 1 to 3, wherein the inorganic salt comprises sodium chloride and/or potassium chloride, and preferably the amount of inorganic salt ranges from 40% to 90% by weight of the composition.

5. A composition according to any of claims 1 to 4, wherein the hydrocolloid comprises at least one compound chosen from the group consisting of xanthan gum, locust bean gum, guar gum, and konjac gum.

6. A composition according to claim according to claim 5, wherein the hydrocolloid comprises xanthan gum and konjac gum in a weight ratio ranging from 1.5:1 to 2.5:1.

7. A composition according to any of claims 1 to 6, wherein the composition comprises starch and water mixed with the edible fat and inorganic salt.

8. A method for preparation of a composition according to any of claims 1 to 7, comprising the following steps:
a) supplying a composition in liquid form comprising an edible fat and inorganic salt;
b) supplying an aqueous composition comprising a hydrocolloid that is dissolved or dispersed in the aqueous composition to form a hydrogel;
c) formation of hydrogel particulates from the composition of step b);
d) dispersing the hydrogel particulates from step c) into the composition from step a);
e) optionally cooling the mixture from step d); and
f) drying the mixture from step d) or from step e).

9. A method according to claim 8, wherein in step b) the concentration of the hydrocolloid ranges from 0.5% to 5% based on the weight of the aqueous dispersion, preferably from 1% to 4% by weight.

10. A method according to claim 8 or 9, wherein the composition from step b) additionally comprises an inorganic salt, preferably sodium chloride and/or potassium chloride, preferably at a concentration of maximally 30% by weight of the aqueous composition.

11. A method according to any of claims 8 to 10, wherein the gel particulates in step c) have a volume weighted average diameter ranging from 50 micrometer to 5 millimeter, preferably from 100 micrometer to 1 millimeter; preferably from 100 micrometer to 500 micrometer.

12. A method according to any of claims 8 to 11, wherein in step d) the weight ratio of the composition from step a) and the composition from step c) ranges from 99:1 to 30:70, preferably from 95:5 to 35:65, preferably from 90:10 to 50:50.

13. Use of a composition according to any of claims 1 to 7 as a bouillon cube.

## Patentansprüche

1. Feste oder halb-feste Zusammensetzung als Bouillonwürfel, umfassend ein essbares Fett und ein anorganisches Salz, wobei die Zusammensetzung Poren umfasst und wobei die Poren ein Hydrokolloid enthalten, die Poren 1 bis 70% des Volumens der Zusammensetzung ausmachen, wobei mindestens ein Teil des Hydrokolloids in den Poren an der Wand der Poren gebunden ist und wobei sich der Querschnittinnendurchmesser der Poren von 50 Mikrometer bis 5 Millimeter, vorzugsweise von 100 Mikrometer bis 1 Millimeter, vorzugsweise von 100 Mikrometer bis 500 Mikrometer, erstreckt.

2. Zusammensetzung nach Anspruch 1, wobei die Poren von 5 bis 65% des Volumens der Zusammensetzung, vorzugsweise von 10 bis 50% des Volumens der Zusammensetzung, ausmachen.

3. Zusammensetzung nach irgendeinem der Ansprüche 1 oder 2, wobei sich die Menge des essbaren Fetts von 5% bis 50 Gewichts-% der Zusammensetzung erstreckt.

4. Zusammensetzung nach irgendeinem der Ansprüche 1 bis 3, wobei das anorganische Salz Natriumchlorid und/oder Kaliumchlorid umfasst und sich die Menge des anorganischen Salzes von 40% bis 90 Gewichts-% der Zusammensetzung erstreckt.

5. Zusammensetzung nach irgendeinem der Ansprüche 1 bis 4, wobei das Hydrokolloid mindestens eine Verbindung umfasst, die aus der aus Xanthangummi, Johannisbrotkernmehl, Guargummi und Konjakgummi bestehenden Gruppe ausgewählt ist.

6. Zusammensetzung nach Anspruch 5, wobei das Hydrokolloid Xanthangummi und Konjakgummi in einem Gewichtsverhältnis von 1,5:1 bis 2,5:1 umfasst.

7. Zusammensetzung nach irgendeinem der Ansprüche 1 bis 6, wobei die Zusammensetzung Stärke und Wasser, vermischt mit dem essbaren Fett und dem anorganischen Salz, umfasst.

8. Verfahren zur Herstellung einer Zusammensetzung nach irgendeinem der Ansprüche 1 bis 7, umfassend die folgenden Schritte:
a) Bereitstellen einer Zusammensetzung in flüssiger Form, umfassend ein essbares Fett und ein anorganisches Salz,
b) Bereitstellen einer wässrigen Zusammensetzung, umfassend ein Hydrokolloid, das in der wässrigen Zusammensetzung zur Bildung eines Hydrogels gelöst oder dispergiert ist,
c) Bilden eines teilchenförmigen Hydrogels aus der Zusammensetzung des Schritts b),
d) Dispergieren des teilchenförmigen Hydrogels vom Schritt c) in die Zusammensetzung vom Schritt a),
e) optionales Abkühlen der Mischung vom Schritt d) und
f) Trocknen der Mischung vom Schritt d) oder vom Schritt e).

9. Verfahren nach Anspruch 8, wobei sich im Schritt b) die Konzentration des Hydrokolloids von 0,5% bis 5%, bezogen auf das Gewicht der wässrigen Dispersion, vorzugsweise von 1% bis 4 Gewichts-%, erstreckt.

10. Verfahren nach Anspruch 8 oder 9, wobei die Zusammensetzung vom Schritt b) zusätzlich ein anorganisches Salz, vorzugsweise Natriumchlorid und/oder Kaliumchlorid, vorzugsweise in einer Konzentration von maximal 30 Gewichts-% der wässrigen Zusammensetzung, umfasst.

11. Verfahren nach irgendeinem der Ansprüche 8 bis 10, wobei das teilchenförmige Gel im Schritt c) einen volumengewichteten Durchschnittsdurchmesser aufweist, der sich von 50 Mikrometer bis 5 Millimeter, vorzugsweise von 100 Mikrometer bis 1 Millimeter, vorzugsweise von 100 Mikrometer bis 500 Mikrometer, erstreckt.

12. Verfahren nach irgendeinem der Ansprüche 8 bis 11, wobei sich im Schritt d) das Gewichtsverhältnis der Zusammensetzung vom Schritt a) und der Zusammensetzung vom Schritt c) von 99:1 bis 30:70, vorzugsweise von 95:5 bis 35:65, vorzugsweise von 90:10 bis 50:50, erstreckt.

13. Verwendung einer Zusammensetzung nach irgendeinem der Ansprüche 1 bis 7 als Bouillonwürfel.

## Revendications

1. Composition solide ou semi-solide étant un cube de bouillon, comprenant une graisse comestible et un sel inorganique, dans laquelle la composition comprend des pores, et dans laquelle les pores contiennent un hydrocolloïde ; les pores constituent de 1 à 70 % du volume de la composition, dans laquelle au moins une partie de l'hydrocolloïde dans les pores est fixée à la paroi des pores, et dans laquelle le diamètre transversal interne des pores est compris entre 50 micromètres et 5 millimètres, de préférence entre 100 micromètres et 1 millimètre, de préférence entre 100 micromètres et 500 micromètres.

2. Composition selon la revendication 1, dans laquelle les pores constituent de 5 à 65 % du volume de la composition, de préférence de 10 à 50 % du volume de la composition.

3. Composition selon l'une quelconque des revendications 1 ou 2, dans laquelle la quantité de graisse comestible est comprise entre 5 % et 50 % en masse de la composition.

4. Composition selon l'une quelconque des revendications 1 à 3, dans laquelle le sel inorganique comprend du chlorure de sodium et/ou du chlorure de potassium, et de préférence la quantité de sel inorganique est comprise entre 40 % et 90 % en masse de la composition.

5. Composition selon l'une quelconque des revendications 1 à 4, dans laquelle l'hydrocolloïde comprend au moins un composé choisi dans le groupe constitué de gomme xanthane, de gomme de caroube, de gomme guar, et de gomme de konjac.

6. Composition selon la revendication 5, dans laquelle l'hydrocolloïde comprend de la gomme xanthane et de la gomme de konjac dans un rapport massique compris entre 1,5:1 et 2,5:1.

7. Composition selon l'une quelconque des revendications 1 à 6, dans laquelle la composition comprend de l'amidon et de l'eau mélangés avec la graisse comestible et le sel inorganique.

8. Procédé de préparation d'une composition selon l'une quelconque des revendications 1 à 7, comprenant les étapes suivantes :
a) de fourniture d'une composition dans une forme liquide comprenant une graisse comestible et un sel inorganique ;
b) de fourniture d'une composition aqueuse comprenant un hydrocolloïde qui est dissous ou dispersé dans la composition aqueuse pour former un hydrogel ;
c) de formation de matières particulaires d'hydrogel à partir de la composition de l'étape b) ;
d) de dispersion des matières particulaires d'hydrogel de l'étape c) dans la composition de l'étape a) ;
e) de refroidissement éventuel du mélange de l'étape d) ; et
f) de séchage du mélange de l'étape d) ou de l'étape e).

9. Procédé selon la revendication 8, dans lequel dans l'étape b) la concentration de l'hydrocolloïde est comprise entre 0,5 % et 5 % rapporté à la masse de la dispersion aqueuse, de préférence entre 1 % et 4 % en masse.

10. Procédé selon la revendication 8 ou 9, dans lequel la composition de l'étape b) comprend de plus un sel inorganique, de préférence du chlorure de sodium et/ou du chlorure de potassium, de préférence à une concentration au maximum de 30 % en masse de la composition aqueuse.

11. Procédé selon l'une quelconque des revendications 8 à 10, dans lequel les matières particulaires de gel dans l'étape c) présentent un diamètre moyen pondéré en volume compris entre 50 micromètres et 5 millimètres, de préférence entre 100 micromètres et 1 millimètre, de préférence entre 100 micromètres et 500 micromètres.

12. Procédé selon l'une quelconque des revendications 8 à 11, dans lequel dans l'étape d) le rapport massique de la composition de l'étape a) et de la composition de l'étape c) est compris entre 99:1 et 30:70, de préférence entre 95:5 et 35:65, de préférence entre 90:10 et 50:50.

13. Utilisation d'une composition selon l'une quelconque des revendications 1 à 7 comme un cube de bouillon.
